# EUROPEAN PATENT SPECIFICATION

(11) **EP 1 719 741 B1**
(45) Date of publication and mention of the grant of the patent: **14.05.2008**
(21) Application number: 04714808.5
(22) Date of filing: 26.02.2004
(51) Int. Cl.: C04B 7/00, C04B 7/32, C04B 14/04

(54) **CONSTRUCTION CEMENT AND METHOD FOR THE PRODUCING THEREOF**
BAUZEMENT UND HERSTELLUNGSVERFAHREN DAFÜR
CIMENT DE CONSTRUCTION, ET PROCEDE D'OBTENTION D'UN CIMENT DE CONSTRUCTION

(43) Date of publication of application: 08.11.2006
(73) Proprietor: Fundacion Labein, 48013 Bilbao (ES); Consejo Superior de Investigaciones Cientificas (CSIC), 28006 Madrid (ES)
(72) Inventor: PORRO GUTIERREZ, Antonio, 48930 Getxo (ES); CAMPILLO SANTOS, Igor, 48015 Bilbao (ES); SANCHEZ DOLADO, Jorge, 48901 Baracaldo (ES); GONI ELIZALDE, Sara, 28230 Las Rozas (ES); GUERRERO BUSTOS, Ana, Maria, 28931 Madrid (ES)
(74) Representative: Primo de Rivera y Urquijo, Jose A.
(86) International application number: PCT/ES2004/000092
(87) International publication number: WO 2005/082802

(56) References cited:
- EP-A1- 1 312 588
- WO-A2-02/28794
- FR-A1- 2 748 270
- GB-A- 2 128 180

## Description

### FIELD OF THE ART

This invention relates to building cement comprising, as a first component, belite clinker, and which is suitable for, among others, mortars and concretes. It also relates to a process of obtaining building cement.

### STATE OF THE ART

Traditional belite cement primarily consists of the structural β variety of dicalcium silicate (belite), a compound that is obtained from mixtures of CaCO₃ and clay heated up to 1400 °C. Therefore belite cement has certain properties, distinguished from ordinary Portland cement, necessary for certain applications. First, it has slower hydration kinetics, so the heat that is released is more gradual, preventing shrinkage problems. This makes it suitable for the mass manufacture of large concrete blocks, such as in the case of dams. Secondly, it is a more microstructurally stable cement compared to some aggressive processes taking place in highly alkaline mediums, such as ordinary Portland cement usually is. Furthermore, the minimum amount of Ca(OH)₂ that is produced during its hydration assures its stability against sulphate attack.

These properties, together with less environmental pollution in terms of CO₂ emissions, compared to that which occurs during the traditional Portland cement manufacturing process, and conservation of natural raw materials, are promoting the development of research directed towards obtaining new active belite cements, in the manufacturing processes of which secondary raw materials and environmental-friendly and economically viable industrial processes are used, preventing or at least reducing said environmental problems. In this sense, the use of industrial by-products and wastes as alternative raw materials is considerably increasing.

Nevertheless, the fact that its hydration rate is low makes it develop poor initial resistances, increasing formwork times since the setting of the concrete is slower, and therefore making its large-scale application difficult since construction times are delayed up to unfeasible extremes. Numerous investigations have been carried out because of this in the interest of increasing the reactivity of the belite phase (belite activation) and achieving better mechanical performance.

The methods used until now for increasing the reactivity of belite cements are basically three in number:

### I. Fast clinker cooling.

British patent GB2013648, published on August 15, 1979, by RICHARD SCHRADER et al., entitled "*A Process for the Manufacture of Cement",* claims a process for obtaining an active belite cement. The manufacturing process is similar to that of a Portland cement, using raw material formulations appropriate for obtaining the β variety belite phase of dicalcium silicate. Said phase is active by means of the fast cooling of the sintered mixture in a temperature range of 1350 °C and 1450 °C.

British patent GB2128180, published on April 26, 1984, by RUMPLER KARLHEINZ et al., entitled *"Method and apparatus for manufacturing cement of the Belite type",* claims a belite cement clinker sintered at 1350 °C-1450 °C followed by fast cooling, preferably with a cooling gradient in the range of 1350 °C-1250 °C as the upper limit and 1000 °C-800 °C as the lower limit.

### II. Use of wastes as raw material and incorporation of stabilizing agents in the dicalcium silicate lattice: alkali metals (Na and K), Fe or Al.

US patent US 5,509,962 published on April 23, 1996, by TANG FULVIO J (US), entitled "*Cement containing active belite*", claims a cement clinker essentially formed by the belite phase in its alpha variety and a ferrite phase, with a composition of about 0.04-0.13 mol of Na₂O, 0.03-0.07 mol of K₂O, 0.09-0.18 mol of Fe₂O₃ and 2.8 mol of dicalcium silicate. As a raw material, a mixture is used consisting of 70.6% calcareous mineral, 22% rice hull ash, with an 85% SiO₂ purity, and the following commercial agents: 2.4% Fe₂O₃, 2.5% Na₂CO₃ and 2.5% K₂CO₃. Said mixture is ground and pressed, forming cylindrical pellets heated at 1400 °C for 1 hour. The clinker is ground for 1.5 hours until obtaining a Blaine fineness of 0.5 m²/g. Two types of cement are manufactured with this clinker, which contains 90% dicalcium silicate (C₂S) according to Bogue calculations (ASTM C 150-89 Standard): the one called FIRH cement with 77% clinker, 7% anhydrite and 16% rice hull ash; and the cement called FIGS with 64.2% clinker, 5.8% anhydrite and 30% slag.

US patent document US2003010257 published on January 16, 2003, by TATSUO IKABATA et al., entitled "*Cement clinker, cement composition, method for producing cement clinker and method for treatment of waste containing alkali component",* claims a cement clinker characterized in that it contains Al₂O₃ and Fe₂O₃, wherein the weight ratio of Al₂O₃/Fe₂O₃ is 0.05-0.62, and alkali components and C₂S wherein the Y content (% by weight) of alkali components and the X content (% by weight) of C₂S satisfies the formula: 0.0025X+0.1Y≤Y ≤0.01X+0.8. Clinker production allows the incorporation of alkali components from wastes with considerable advantages in increasing the belite hydration rate.

German patent DE3414196, published on October 31, 1985 by TOEPFER PAUL et al., entitled "*Alkali-active belite cement",* claims a process for producing belite cement from a raw material consisting of CaCO₃, SiO₂, Al₂O₃ and Fe₂O₃, with alkali ion addition. The alkalis together with a fast cooling improve the properties of the belite cement clinker.

### III. Use of low lime content, hydrothermally activated coal combustion fly ash as raw material, and synthesis methods called low-energy methods.

WEIMIN JIANG and DELLA M. ROY in Ceramic Bulletin, Vol.71 (4) 1992 pp 642-647, synthesized an active low-energy belite cement from a mixture of CaO and low lime content coal combustion fly ash (FA). The synthesis process has several parts. The mixture of CaO, FA and water is first subjected to heating at 80 °C for 10 hours, then said mixture is heated at 200 °C for 4 hours in a pressurized reactor, in which the pozzolanic reaction of the FAs is activated and the precursor phases of the cement are obtained, which are finally dehydrated by heating between 500 °C-900 °C for 4 hours. The final cement contains the belite phase β-C₂S, mayenite C₁₂A₇ and CaCO₃.

SARA GOÑI et al. in Proc. of Sixth Canmet/ACI International Conference on Fly Ash, Silica Fume, Slag and Natural Pozzolans in Concrete, Bangkok, Ed.: V.M. Malhotra, vol. I, SP-178 pp. 207-224, (1998); and SARA GOÑI et al. in Materials Science of Concrete: The Sidney Diamond Symposium. ISBN: 1-57498-072-6 (1998) pp. 93-108. ANA GUERRERO et al. in Cem. Concr. Res., Vol. 29, pp. 1753-1758(1999), disclose synthesizing belite cement from low lime content FA, based on the work of Weimin and Roy. The main differences of the synthesis process are: omitting the first heating at 80°C for 10 hours of the mixture of FA, CaO and water; heating the precursor hydrated phases of the cement up to 600°C at a heating rate of 10°C/min and from 600°C up to 900°C at a rate of 5°C/min, and immediately cooling the mixture at room temperature.

### DESCRIPTION OF THE INVENTION

This invention has been developed for the purpose of improving the mechanical performance of any belite cement in order to reduce constructive times and thus facilitate its large-scale application. According to this objective, the building cement according to this invention is characterized by the fact that said ceramic material has a particle size under 100 nm.

The ceramic material particles have an activating effect on the belite component and allow increasing its hydration rate. The cement according to the invention thus maintains all the advantages of the conventional belite cement with respect to Portland cement that have been indicated, and it is further appropriate for the large-scale application thereof.

Furthermore, the activation of the belite component of the new cement by means of a ceramic material is not susceptible to harmful arid-alkali reactions and therefore is the only process known to date which allows activation without the implication of harmful side effects.

The activation mechanism is valid for any type of belite component, i.e. regardless of the synthesis route chosen to obtain it. This implies a reduction in the environmental impact because lime decalcification to produce the major belite phase of the belite cement clinker implies 33% less CO₂ emissions.

In one embodiment, said ceramic material shows a particle size preferably between 5 nm and 50 nm, since particle size greatly affects the activating effect of the belite component. Furthermore, it has been verified that belite activation does not occur with particle sizes over 100 nm.

It is believed that, with respect to the activation mechanism, nanomaterials, either nanosilica or nanoalumina, react directly with the C-S-H gel. They thus act as nucleation "points" for gel growth and thus accelerate their formation. More specifically, it is thought that nanoparticle addition promotes the growth of silica chains in the gel, giving therefore a gel with a lower Ca/Si ratio and therefore more stable and microstructurally more complex (with less defects in the manner of vacancies and discontinuities). Thus high initial resistances are obtained, because the C-S-H gel is the major component of the hydrated cement matrix and is responsible for mechanical resistance.

According to advantageous embodiments, the cement comprises a proportion of said second component between 0.2% and 15% by weight of the belite component. Improvements in mechanical resistance at 7 days of up to 200% with respect to belite component resistance have been obtained with these proportions without ceramic nanomaterial. In specific examples which have given very good results the cement comprises a proportion of said second component between 2% and 10% by weight of the belite component.

Preferably, the second component comprises particles of at least one silica material (SiO₂) and/or at least one alumina material (Al₂O₃).

In one embodiment, the second component comprises a colloidal dispersion of ceramic material particles. The fact that it is to be found in the form of a colloidal dispersion stabilises the nanomaterial, preventing its particles from clustering in larger grains, and therefore allowing the particles to have a greater reactivity and a greater activating effect.

Optionally, the second component may comprise particles made of two different ceramic materials which may have different particle sizes.

According to particularly advantageous embodiments of the invention, the belite component is obtained from low lime content fly ash, and with low energy synthesis methods, with synthesis temperatures of approximately 800°C.

The use of a belite component of these characteristics means a clear reduction in production costs, due to the drastic reduction in synthesis temperature (800°C versus 1450°C) and the reduction in grinding needs; furthermore, from the ecological point of view, CO₂ emissions are reduced during the oven process and an industrial process residue is used as the raw material, which implies a reduction in natural resource exploitation and a resulting reduction in quarry exploitation costs.

Thus, the greater technological, economical and environmental reach of the present invention would be achieved with a belite component obtained from hydrothermally activated fly ash as a raw material and so-called low energy synthesis methods.

According to a second aspect, the present invention refers to a process for obtaining building cement characterised in that it comprises the steps of:
(a) producing a belite cement clinker from low lime content fly ash, providing lime (CaO) to the clinker until reaching a CaO/SiO₂ molar ratio approximately and hydrothermally treating the mixture;
(b) grinding the obtained clinker; and
(c) adding to the clinker a second component (B) formed by at least one ceramic material with a particle size under 100 nm.

The belite clinker cement is preferably obtained with a low energy synthesis method.

### DESCRIPTION OF EMBODIMENTS OF THE INVENTION

A cement according to the invention presents a first component which is a belite clinker A and a second component B made up of a ceramic nanomaterial. Nanomaterial in the present document is understood as a material with some of its dimensions under 100 nanometers; and ceramic material is understood as a material made up by at least one metal element and one non-metal element, such that the interatomic bonds are of a predominantly ionic character. Typical examples of ceramic compounds would be NaCl, MgO, FeO, ZnS, Al₂O₃, SiO₂, Fe₂O₃, BaTiO₃, etc.

In one embodiment of the invention, a belite cement is used as component A which is obtained from fly ash from the combustion of low lime content coal as raw material for obtaining the clinker. This raw material needs an additional contribution of lime (CaO) in order to reach a CaO/SiO₂ molar ratio approximately equal to 2 and to obtain a cement with the appropriate composition.

Belite component A is preferably obtained by means of low energy synthesis methods such as those described in the articles described in the introduction, with a low synthesis temperature (800 °C versus the 1450 °C for Portland cement and the 1350 °C for a traditional belite cement), a lower need for grinding the clinker since at said temperature (800 °C) phase fusion is not reached, and a low need for grinding the raw material since this is mainly fly ash with a great surface area. Therefore the energetic and environmental impact of the production process of this cement is clearly less than that of a normal Portland cement.

Minor amounts of Ca(OH)₂, are produced during hydration, which assures a good durability of the mortars and concretes manufactured with the new cement in the aggressive environments in which Ca(OH)₂ may suffer expansive reactions, such as is the case in attacks with sulphates.

The ceramic nanomaterial (component B) performs the function of belite clinker A hydration reaction activator. In preferred embodiments of the invention silica (SiO₂) and alumina (Al₂O₃) ceramic nanomaterials with particle sizes comprised between 5 and 50 nanometers may be used; component B is more reactive the smaller its particle size is.

Ceramic nanomaterial B may be added in the form of a colloidal dispersion, such that its particles are prevented from clustering and a greater activating effect is favoured.

Component proportions in the mixture forming the new cement determines its mechanical properties, which at early ages (< 28 days) are clearly greater than those of belite cement component A (i.e. without nanomaterial) and comparable to those of a normal Portland cement, and particularly a cement of class cem I 32.5. With proportions of component B comprised between from 0.2% to 15% by weight of component A, improvements in mechanical strength are obtained at 7 days of up to 200% with respect to the resistance of component A without nanomaterial.

The process for obtaining cement paste, mortar, etc. with the cements according to the invention depend on the product to be obtained, but it can be said that in general a greater water/cement ratio is used, generally over 0.5% (although this depends on the type of starting belite cement), and that a mixing time exceeding 4 minutes (including resting times) is used and with a typical reference sequence such as:
- from approximately 1.5 minutes to 2.5 minutes mixing between 100 and 1000 rpm;
- from approximately 30 seconds to 1 minute rest;
- from approximately 1.5 minutes to 2.5 minutes mixing between 100 and 1000 rpm;
- optionally, from approximately 30 seconds to 1 minute rest and approximately 1.5 minutes mixing between 100 and 1000 rpm;
- 2 days in the mould

Processes for obtaining different products using cements according to the invention are described in detail in the following examples, and their properties are analysed by comparing them to those of conventional belite cement.

### EXAMPLES

### Introduction

For all the examples set forth below a belite cement (component A) has been used that was obtained from hydrothermally activated fly ash from low lime content coal combustion as raw material, and so-called low energy synthesis methods (such as mentioned at the end of the "State of the Art" section). This cement will be hereinafter called CBCV.

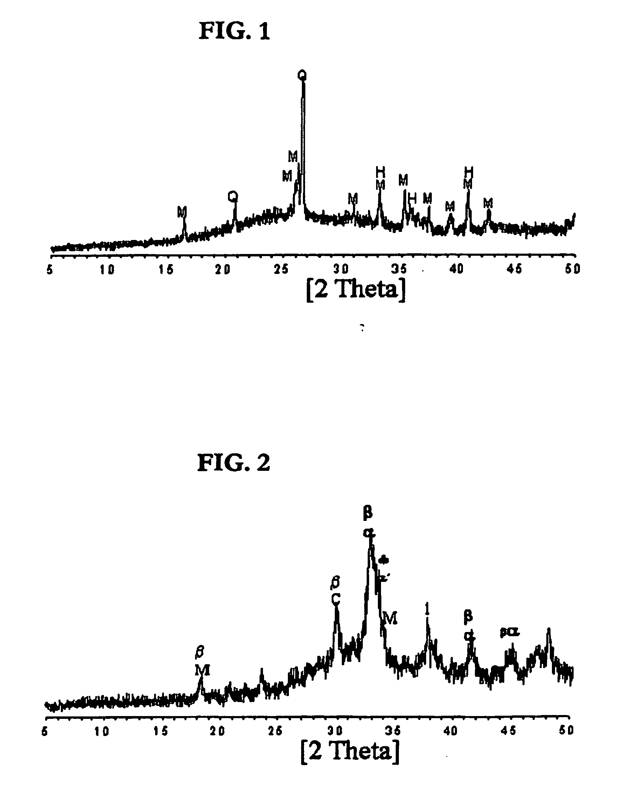

The chemical and mineralogical composition of the fly ash used as raw material appears in Table 1 and Figure 1. The ash complies with the requirements for type F of the ASTM classification: SiO₂ + Al₂O₃ + Fe₂O₃ contents exceeding 70 % and a low lime content, as can be seen in Table 1.

**TABLE 1. Chemical composition of fly ash (% by weight)**

| ***L.I.** | ***I.R.** | **CaO** | **SiO₂** | **Al₂O₃** | **Fe₂O₃** | **MgrO** | **Na₂O** | **K₂O** | **BET (m²/g)** | **Density (g/cc)** |
|---|---|---|---|---|---|---|---|---|---|---|
| 5.6 | 0.3 | 4.65 | 48.8 | 26.8 | 7.45 | 1.9 | 0.67 | 3.65 | 0.75 | 2.11 |

| | | | | | | | | | | |
|---|---|---|---|---|---|---|---|---|---|---|
| *L.I.= Loss on ignition *I.R.= Insoluble Residue | | | | | | | | | | |

The main crystalline phases are: α-SiO₂ (a-quartz), α-Fe₂O₃ (hematite) and Al₆Si₂O₁₃ (mullite). Regarding the amorphous halo, between 15 and 35 2θ corresponds to the starting ash amorphous silica.

Figure 1 shows an X-ray diffractogram of the starting ash, in which M is mullite, H is hematite and Q is α-quartz.

An addition of commercial lime is necessary for cement synthesis so that a Ca/Si molar ratio of 2 is reached in order to obtain the belite cement. The ash, lime and water mixture is hydrothermally treated at 200 °C and a pressure of 1.24 MPa for 4 hours, with constant stirring. After this time, the reactor is cooled and the solid is filtered and dried at a temperature of 80 °C. the dry product is subsequently heated up to 600 °C at a heating speed of 10 °C/min and from 600 °C up to 800 °C at a speed of 5 °C/min; thus obtaining the fly ash belite cement clinker.

This cement will be component A of the examples set forth below.

The crystalline solid phases of component A have been characterized by X-ray diffraction. Figure 2 shows the X-ray diffraction analysis for component A. In the diffractogram, C represents CaCO₃, β represents β-Ca₂SiO₄, α represents α'-L-Ca₂SiO₄, 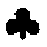 represents C₃A, l represents CaO, and M represents C₁₂A₇. The major crystalline phases are the α'-L and β-C₂S varieties of dicalcium silicate together with greater amounts of mayenite (C₁₂A₇), C₃A (tricalcium aluminate), free CaO and calcite (CaCO₃).

The different examples chosen to illustrate the invention are detailed below.

### Example 1

### Ecoefficient cement from FABC as component A and nanoalumina powder as component B

### Component description

Component A has been described in the introduction to the "Examples" section. Component B is a commercial type of nanoalumina Al₂O₃ (Nyacol^{®} AL20SD) with the characteristics provided by the manufacturer shown in Table 2.

**TABLE 2**

| **Reactive nanomaterial** (%) | **Medium** | **Primary particle size** (nm) | **Appearance** |
|---|---|---|---|
| > 80 | Dry powder | 50 nm | White powder |

Due to the absence of a dispersive medium, the particulate nanoalumina in this Example tends to agglomerate in grains with sizes ranging from 0.1 microns to 1 micron.

### Mixing procedure

Trial mixes of 1 x 1 x 6 cm of mortar with a water/(component A) ratio of 0.8 and a sand/(component A) ratio of 3 were manufactured. Three batches where made with these reference amounts, producing six trial mixes with the aforementioned dimensions for each one. The first batch did not have component B, which will be taken as a reference to estimate the percent of improvement achieved by adding component B. In the second trial mix component B was added in 3% by weight of component A and in the third in 9% by weight of component A.

All the trial mixes were carried out in the following manner. Component A and component B were manually homogenized in a container with a shovel. Then the sand was tipped into the mixture and a manual homogenization was again carried out. Once this initial mixture was ready, distilled water was poured into it and it was mixed by means of an electronic mixer and the following sequence: 2 minutes at 750 rpm, 1 minute rest, 2 minutes at 750 rpm, 1 minute rest and 1 minute at 750 rpm. After mixing the mixture was poured into prismatic moulds with the aforementioned dimensions (1 x 1 x 6 cm) and it was compacted on a compaction table by 60 successive rappings. Afterwards, the mixtures are allowed to cure until breaking time in a climatic chamber with a relative humidity over 90% and a temperature of 21 ± 2 °C. The samples were demoulded 48 hours after mixing.

### Mechanical resistance

Resistance values at 7 and 28 days of the mixtures manufactured according to the previously specified procedure are presented in Table 3.

**TABLE 3**

| Example 1 | 7 days | 28 days |
|---|---|---|
| Cem I 32.5 | ≥ 16 | ≥ 32.5 |
| Comp. A | 4.02 ± 0.26 | 8.46 ± 0.26 |
| Comp. A + 3% Comp. B | 7.86 ± 0.43 | 15.68 ± 0.14 |
| | 96% | 85% |
| Comp. A + 9% Comp. B | 9.74 ± 0.11 | 18.51 ± 0.69 |
| | 142% | 119% |

Table 3 shows mechanical resistance to compression (MPa). The values demanded by the UNE-196-1 regulation for a normal Portland cement of class cem I 32.5 are shown in the first row. The percent of improvement for each mixture of component A with component B regarding the value of component A without component B is shown (separated by a dotted line).

As can be seen the introduction of component B in low percentages with respect to component A means doubling the resistances both at 7 and at 28 days.

### Hydration and durability features

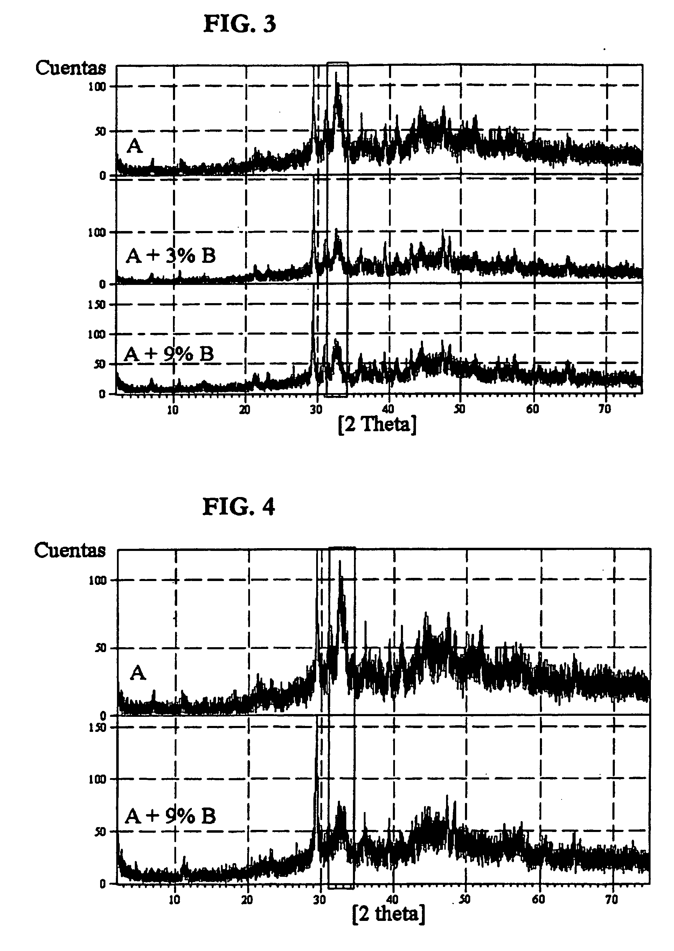

Hydration of the cement obtained in this Example 1 shows several essential features which may be inferred from an X-ray diffraction study (Figure 3) of the hydration products. Figure 3 shows an X-ray diffractogram of hydration at 7 days of component A and of component A plus component B in a proportion by weight of 3 and 9%. The main peak of the belite phases of component A has been framed (Figure 2) in order to stress its consumption as the concentration of component B increases.

As can be seen in Figure 3, the essential features of the cement of Example 1 are:
1. The speed of hydration with respect to a normal belite cement, such as is clear from the mechanical resistance (double at 7 days), and as can be seen in the X-ray spectrums for the hydrated product (component A + component B), which are shown in Figure 3. This figure shows the main peak of the belite phases (2θ ~ 33°) present in component A (Figure 2) in order to stress the consumption of these phases when incorporating component B.
2. The absence of ettringite, the main peaks of which would be found in 2θ ~ 9°, 16°, 23° and 32° and which do not appear in the spectrums studied.
3. The presence of small amounts of portlandite (Ca(OH)₂) (4% at 3 days after hydration, an amount which decreases with time and which can no longer be seen in the diagrams at 7 days shown in Figure 3) compared to the 18% portlandite generated in the hydration of a Portland cement. This is a feature of component A which is not negatively affected by its mixture with component B.
4. The major presence of non-crystalline phases formed by the hydration products of Ca and Si; Ca, Si and Al; Si and Al; and Ca and Al. All this can be inferred from the presence of very wide peaks on a bulging spectrum (amorphous halo from 2θ ~ 20°).

It can be inferred from the last three features mentioned that the mortars and concretes manufactured with the new cement will show good durability in aggressive environments, such as in the case of attacks by sulphates. Thus, the mixture component A and component B proposed in this invention maintains the durability properties of component A, whereas obtaining a product with notable mechanical properties at an early age.

### Example 2

### Ecoefficient cement from FABC as component A and nanoalumina in a colloidal dispersion as component B

Component A has been described in the introduction to the "Examples" section. Component B is a commercial type of nanoalumina Al₂O₃ (Nyacol^{™} AL20) with the characteristics provided by the manufacturer shown in Table 4.

**TABLE 4**

| **Reactive nanomaterial** (%) | **Medium** | **Primary particle size** (nm) | **Appearance** |
|---|---|---|---|
| 20 | Water | 50 nm | Milky |

In contrast to the nanoalumina in Example 1, the nanoalumina of the current Example is shown as a colloidal dispersion, i.e. alumina particles of a mean size of 50 nm dispersed in a liquid medium, which in this case is water. The nanometric character of the active particles of component B is thus preserved.

### Mixing process

Trial mixes of 1 × 1 × 6 cm of mortar with a water/(component A) ratio of 0.8 and a sand/(component A) ratio of 3 were manufactured. Three batches where made with these reference amounts, producing six trial mixes with the aforementioned dimensions for each one. The first batch did not have component B, which will be taken as a reference to estimate the percent of improvement achieved by adding component B. In the second trial mix component B was added in 3% by weight of component A and in the third in 9% by weight of component A. Knowing that the nanoalumina content in component B is 20% (TABLE 4), the percent of active ingredient (nanoalumina) is less than that of the product used in this example as component B (Nyacol^{®} AL20).

All the trial mixes were carried out in the following manner. Component A and the sand were manually homogenized in a container with a shovel. Distilled water was mixed with component B in another container such as to achieve a water/(Component A) ratio of 0.8. The contribution in water of component B must be taken into account (80% of component B is water, TABLE 4). This mixture was homogenized by stirring for 5 minutes. After this initial step the mixture of water and component B was poured on the mixture of component A and sand and mixing, moulding and curing was carried out following the same sequence as that set forth in Example 1.

### Mechanical resistance

Resistance values at 7 and 28 days of the mixtures carried out according to the aforementioned procedure are shown in Table 5.

**TABLE 5**

| Example 2 | 7 days | 28 days |
|---|---|---|
| Cem I 32.5 | ≥ 16 | ≥ 32.5 |
| Comp. A | 4.02 ± 0.26 | 8.46 ± 0.26 |
| Comp. A + 3 % Comp . B (0.6% nanoalumina) | 6.29 ± 0.24 | 16.02 ± 0.99 |
| | 56% | 89% |
| Comp. A + 9% Comp. B (1.8% nanoalumina) | 7.41 ± 0.28 | 18 ± 1 |
| | 84% | 113% |

Table 5 shows mechanical resistance to compression (MPa). The values demanded by the UNE-196-1 regulation for a normal Portland cement of class cem I 32.5 are shown in the first row. The percent of improvement for each mixture of component A with component B regarding the value of component A without component B is shown (separated by a dotted line).

As can be seen the introduction of component B in low percentages with respect to component A means doubling the resistances both at 7 and at 28 days (at this age, with 9% of component B the resistance value is actually doubled).

A comparison between these results and those obtained in Example 1 shows an apparently greater effectiveness of component B in Example 1 with respect to the present Example. However, it must be taken into account that component B in the present example contains at least 4 times less nanoalumina (20% concentration, TABLE 4) than component B in Example 1. Therefore, a greater activation of component A of the invention is achieved with a smaller amount of active ingredient (nanoalumina in this case). This is due to the fact that component B in Example 2 maintains its nanometric character (size under 100 nm) and thus a greater reactivity given that the nanoalumina is stabilized by the water and is not clustered in larger grains, such as occurs with the nanoalumina in Example 1. All this will have important consequences in the hydration, as discussed below.

### Hydration and durability features

Hydration of the present invention, according to this Example 2, has the same features as those shown in Example 1 (speed of hydration, absence of ettringite and portlandite and presence of an amorphous halo), although with some quantitative differences worth mentioning:
1. The same as in Example 1, the setting reaction kinetics are accelerated by the presence of component B, such as clearly seen by its mechanical resistance (almost double at 7 days), and as can be seen in the X-ray spectrums for the reference hydrated product (only component A) and for the hydrated product (component A + component B) shown in Figure 4, which shows an X-ray diffractogram of the hydration at 7 days for component A and component A plus component B in a 9% proportion by weight. The main peak of the belite phases (2θ ~ 33°) present in component A (Figure 2) have been framed in order to stress the consumption of these phases when incorporating nanoalumina. However, it is worth stressing, in contrast to Example 1 (Figure 3), a greater reduction of the belite phase peaks (Figure 2) for the same amount of component B. Although it is true that the amount of nanoalumina present in component B of the present Example is lower than that of Example 1, it is also true that the nanoalumina of component B in the present example maintains its nanometric character by being in a colloidal dispersion, and thus shows a greater reactivity, as is demonstrated in the X-ray diagrams in Figure 4. Note that the intensity of peak 2θ ~ 33° is reduced practically in half (0.5 factor) for 9% of component B, or 1.5% of nanoalumina, whereas the same peak in Figure 3 was reduced by a 0.75 factor. For all this, it is worth stressing the crucial role of the nanometric character of the active ingredient of component B, and which can even have important repercussions regarding exploiting the present invention.
2. The amorphous halo is slightly more pronounced in this case than in Example 1. Also, a peak around 2θ ~ 7° corresponding to a crystalline phase of a hydration product with Ca, Si and Al (platlingite), present in Figure 3, is not seen in Figure 4. All this leads to assume a greater presence of non-crystalline phases formed by hydration products of Ca and Si; of Ca, Si and Al; and of Si and Al and of Ca and Al.

From all of this a high durability may be inferred, as mentioned already in Example 1, by maintaining the same features. Furthermore, the quantitative differences mentioned lead to assume a greater quality microstructure in the present example than in Example 1. That is, at the same age of 7 days in Example 2 there is more hydrated cement (more belite consumed, as can be seen in the lower characteristic peak 2θ ~ 33°) and therefore a better formed microstructure.

### Example 3

### Ecoefficient cement from FABC as component A and powder nanosilica as component B

Component A has been described in the introduction to the "Examples" section. Component B is a commercial type of nanosilica (Nyacol^{®} Nyasil 5) with the characteristics provided by the manufacturer shown in Table 6.

**TABLE 6**

| **Reactive nanomaterial** (%) | **Medium** | **Primary particle size** (nm) | **Appearance** |
|---|---|---|---|
| >96 | Dry powder | 5 nm | White powder |

Due to the absence of a dispersive medium, the particular nanosilica in this example tends to cluster in grains with variable sizes around 1 micron.

### Mixing process

Trial mixes of 1 × 1 × 6 cm of cement paste (without sand) with a water/(component A) ratio of 0.8 were manufactured. Two batches were made with these reference amounts, producing 6 trial mixes with the aforementioned dimensions for each one. The first batch did not contain component B, which will be taken as a reference for estimating the percent improvement achieved by adding component B. In the second trial mix component B was added in 6% by weight of component A.

All the trial mixes were carried out in the following manner. Component A and component B were manually homogenized in a container with a shovel. Once this initial mixture was ready, distilled water was poured on said mixture and it was mixed by means of an electronic mixer and the following sequence: 1 minute and 30 seconds at 750 rpm, 1 minute rest and 1 minute and 30 seconds at 750 rpm. After mixing the mixture was poured in prismatic moulds with the aforementioned dimensions (1 x 1 x 6 cm) and it was compacted on a compaction table by 60 successive rappings. Afterwards, the mixtures are allowed to cure until the breaking time in a climatic chamber with a relative humidity over 90% and a temperature of 21 ± 2 °C. The samples were demoulded 48 hours after mixing.

### Mechanical resistance

Resistance values at 7 days for the mixtures carried out according to the aforementioned procedure are shown in Table 7.

**TABLE 7**

| Example 1 | 7 days |
|---|---|
| Comp. A | 3.41 ± 0.27 |
| Comp. A + 6% Comp. B | 5.98 ± 0.52 |
| | 75% |

Table 7 shows mechanical resistance to compression (MPa). The percent of improvement for the mixture of component A with component B regarding the value of component A without component B is shown (first row).

As can be seen the introduction of component B in low percentages with respect to component A means considerably increasing initial resistance (about 75%).

### Hydration and durability features

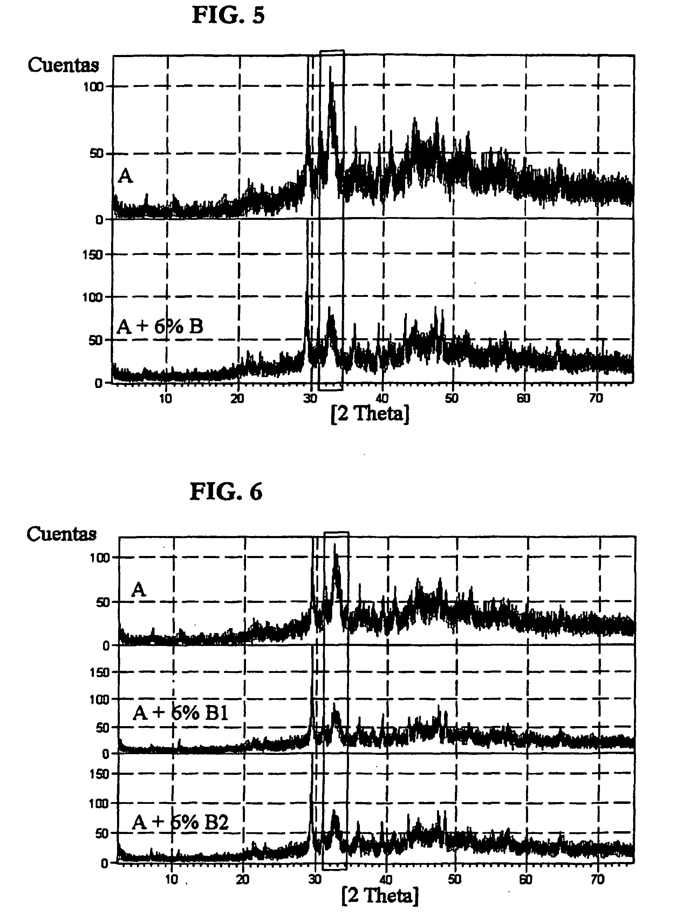

Hydration of the cement of this Example 3 has the same features as those shown in Examples 1 and 2 (hydration speed, absence of ettringite and portlandite and presence of an amorphous halo). Figure 5 shows an X-ray diffractogram for hydration at 7 days of component A and for component A plus component B in a 6% proportion by weight. The main peak for the belite phases of component A (Figure 2) has been framed to stress its consumption when adding component B. It is worth mentioning a greater belite consumption with respect to Example 1, as evidenced by the lower height of peak 2θ ~ 33° in the case of the component A and component B mixture (lower panel in Figure 5) versus that of component A without component B (upper panel in Figure 5). Furthermore, not including alumina will not give rise to non-crystalline phases formed by hydration products containing Al, being mainly Ca and Si compositions.

From all of this a high durability may be inferred, as mentioned already in Examples 1 and 2, by maintaining the same durability features as component A.

### Example 4

### Ecoefficient cement from FABC as component A and colloidal nanosilica as component B

Component A has been described in the introduction to the "Examples" section. Colloidal nanosilica has been used as component B, but with two different particle sizes. That which will be called component B1 is a commercial type of nanosilica (Levasil^{®} Grade 100) and that which will be called component B2 is another type of commercial nanosilica (Levasil^{®} Grade VPAC 4038) with the characteristics provided by the manufacturer shown in Tables 8-1 and 8-2, respectively.

**TABLE 8-1**

| **Reactive nanomaterial** (%) | **Medium** | **Primary particle size** (nm) | **Appearance** |
|---|---|---|---|
| 45 | Water | 30 nm | Milky |

**TABLE 8-2**

| **Reactive nanomaterial** (%) | **Medium** | **Primary particle size** (nm) | **Appearance** |
|---|---|---|---|
| 30 | Water | 15 nm | Transparent, slightly opalescent liquid |

In contrast to the nanosilica of Example 3, the nanosilica of the current Example is shown as a colloidal dispersion, i.e. silica particles with a mean size of 30 and 15 nm, respectively, dispersed in a liquid medium, which in this case is water. Thus, the nanometric character of the active particles of component B is maintained and there is no clustering.

### Mixing process

Trial mixes of 1 × 1 × 6 cm of cement paste (without sand) with a water/(component A) ratio of 0.8 were manufactured. Two batches were made with these reference amounts, producing 6 trial mixes with the aforementioned dimensions for each one. The first batch did not contain component B, which will be taken as a reference for estimating the percent improvement achieved by adding component B. In the second trial mix component B was added in 6% by weight of component A. Taking into account that the nanosilica content in component B1 is 45% (TABLE 8-1), and that the nanosilica content in component B2 is 30% (TABLE 8-2), the percent of active ingredient (nanosilica) is lower than that of the product used in this example as component B (2.7% Levasil^{®} Grade 100 as B1 and 1.8% Levasil^{®} Grade VPAC 4038 as B2).

All the trial mixes were carried out in the following manner. Distilled water was mixed with component B in another container such as to achieve a water/(Component A) ratio of 0.8. The contribution in water of component B must be taken into account (55% of component B1 is water, 8-1, and 70% of component B2 is water, TABLE 8-2). Once this initial mixture was ready, component A was poured over said mixture and it was mixed by means of an electronic mixer and the following sequence: 1 minute and 30 seconds at 750 rpm, 1 minute rest and 1 minute and 30 seconds at 750 rpm. After mixing the mixture was poured into prismatic moulds with the aforementioned dimensions (1 × 1 × 6 cm) and it was compacted on a compaction table by 60 successive rappings. Afterwards, the mixtures are allowed to cure until breaking time in a climatic chamber with a relative humidity over 90% and a temperature of 21 ± 2 °C. The samples were demoulded 48 hours after mixing.

### Mechanical resistance

Resistance values at 7 days for the mixtures carried out according to the aforementioned procedure are shown in Table 9.

**TABLE 9**

| Example 4 | 7 days |
|---|---|
| Comp. A | 3.41 ± 0.27 |
| Comp. A + 6% Comp. B1 (2.7% nanosilica) | 8.71 ± 0.51 |
| | 155% |
| Comp. A + 6% Comp. B2 (1.8% nanosilica) | 10.1 ± 0.6 |
| | 196% |

Table 9 shows the mechanical resistance to compression (MPa). The percent of improvement for the mixture of component A with component B regarding the value of component A without component B is shown (first row).

As can be seen the introduction of component B in low percentages with respect to component A means almost tripling the resistance value obtained only with component A (~200% for the mixture with component B2).

A comparison of these results with those obtained in Example 3 shows a greater effectiveness of the two components B of the present Example with respect to Example 3. As in the case of Example 2 with respect to Example 1, the fact that the components B of this Example maintain their nanometric character due to their being in a dispersion (there are no clusters) has a strong impact in the increase in final mechanical properties. On the other hand, with this example the influence of the particle size is also shown. In fact, with a greater amount of nanosilica in component B1 than in component B2 there is less resistance to compression. This is due to the increase in reactivity with the reduction in particle size (30 nm in B1 and 15 nm in B2). The same can be said if comparing with respect to examples 1 and 2, although in this case the different nature of the addition must be taken into account and the fact that in Examples 1 and 2 it is cement paste and not mortar that is being worked with.

### Hydration and durability features

Hydration of the material obtained in Example 4 has the same features as those in Examples 1, 2 and 3 (hydration speed, absence of ettringite and portlandite and presence of an amorphous halo). It has similar features to those of Example 3 regarding non-crystalline phase composition insofar as that they will not contain Al. On the other hand, a similar consumption of belite as that in Example 3 is observed. However, the fact that greater mechanical resistance is obtained suggests the presence of more polymerized non-crystalline phases, which unfortunately cannot be detected by X-ray diffraction. In any case, this fact, as is well-known, will not negatively affect durability, but on the contrary, it is also a sign of greater hydration speed.

Figure 6 shows the X-ray diffractogram of hydration at 7 days for component A and component A plus component B in a proportion by weight of 9%. The main peak of the belite phases of component A (Figure 2) has been framed to stress its consumption with the addition of component B.

Although some specific embodiments of the present invention have been described a person skilled in the art will be able to introduce variants and modifications depending on the particular requirements of each case, and to substitute some elements for other technically equivalent ones, for example, although a cement made essentially from a belite clinker and a ceramic component has been described herein, it is clear that the cement and each of its components may also contain conventional additives, particularly super plasticizing agents, and other elements without leaving the scope of protection defined by the attached claims.

## Claims

1. A building cement comprising as a first component a belite clinker (A) and a second component (B) made up of particles of at least one ceramic material, **characterized by** the fact that said ceramic material has a particle size under 100 nm.

2. A cement according to claim 1, **characterized by** the fact that the particle size of said ceramic material is comprised between 5 nm and 50 nm.

3. A cement according to any of the previous claims, **characterized by** the fact that it comprises a proportion of said second component (B) between 0.2% and 15% by weight of the belite component (A).

4. A cement according to claim 3, **characterized by** the fact that it comprises a proportion of said second component (B) between 2% and 10% by weight of the belite component.

5. A cement according to any of the previous claims, **characterized by** the fact that said second component (B) comprises particles of at least one silica material (SiO₂).

6. A cement according to any of the previous claims, **characterized by** the fact that said second component (B) comprises particles of at least one alumina material (Al₂O₃).

7. A cement according to any of the previous claims, **characterized by** the fact that said second component (B) comprises a colloidal dispersion of ceramic material particles.

8. A cement according to any of the previous claims, **characterized by** the fact that said second component (B) comprises particles of two different ceramic materials.

9. A cement according to claim 8, **characterized by** the fact that said two materials have a different particle size.

10. A cement according to any of the previous claims, **characterized by** the fact that the belite component (A) is obtained from low lime content fly ash.

11. A cement according to claim 10, **characterized by** the fact that the belite component (A) is obtained with low energy synthesis methods, with synthesis temperatures of approximately 800°C.

12. A cement according to any of the previous claims, **characterized by** the fact that it additionally comprises a superplasticizing agent.

13. A process of obtaining a building cement, **characterized by** the fact that it comprises the steps of:
(a) producing a belite cement (A) clinker from low lime content fly ash by adding lime (CaO) to the clinker until reaching a CaO/SiO₂ molar ratio approximately 2 and hydrothermally treating the mixture;
(b) grinding the obtained clinker; and
(c) adding to the clinker a second component (B) made up of at least one ceramic material with a particle size under 100 nm.

14. A process according to claim 13, **characterized by** the fact that the belite cement clinker is obtained with a low energy synthesis method.

15. The use of a ceramic material with a particle size under 100 nm according to any of claims 1 to 9 for activating a belite clinker in a building material.

16. A paste comprising a binder and water, **characterized by** the fact that the binder comprises a cement according to any of claims 1 to 12.

17. A mortar comprising a binder, an aggregate and water, **characterized by** the fact that the binder comprises a cement according to any of claims 1 to 12.

18. A concrete comprising a binder, an aggregate and water, **characterized by** the fact that the binder comprises a cement according to any of claims 1 to 12.

## Patentansprüche

1. Bauzement, der als erstes Bestandteil einen Belitklinker (A) und ein zweites Bestandteil (B) umfasst, das aus Partikeln aus zumindest einem keramischen Material besteht, **dadurch gekennzeichnet, dass** das genannte keramische Material eine Partikelgröße von unter 100 nm hat.

2. Zement nach Anspruch 1, **dadurch gekennzeichnet, dass** die Partikelgröße des genannten keramischen Materials zwischen 5 nm und 50 nm beträgt.

3. Zement nach einem der vorgehenden Ansprüche, **dadurch gekennzeichnet, dass** er einen Gewichtsanteil des genannten zweiten Bestandteils (B) zwischen 0,2% und 15% des Belitbestandteils (A) umfasst.

4. Zement nach Anspruch 3, **dadurch gekennzeichnet, dass** er einen Gewichtsanteil des genannten zweiten Bestandteils (B) zwischen 2% und 10% des Belitbestandteils umfasst.

5. Zement nach einem der vorgehenden Ansprüche, **dadurch gekennzeichnet, dass** das genannte zweite Bestandteil (B) Partikel von zumindest einem Silicamaterial (SiO₂) umfasst.

6. Zement nach einem der vorgehenden Ansprüche, **dadurch gekennzeichnet, dass** das genannte zweite Bestandteil (B) Partikel von zumindest einem Aluminiumoxidmaterial (Al₂O₃) umfasst.

7. Zement nach einem der vorgehenden Ansprüche, **dadurch gekennzeichnet, dass** das genannte zweite Bestandteil (B) eine kolloidale Dispersion von Partikeln aus keramischem Material umfasst.

8. Zement nach einem der vorgehenden Ansprüche, **dadurch gekennzeichnet, dass** das genannte zweite Bestandteil (B) Partikel aus zwei unterschiedlichen keramischen Materialien umfasst.

9. Zement nach Anspruch 8, **dadurch gekennzeichnet, dass** die genannten zwei Materialien eine unterschiedliche Partikelgröße haben.

10. Zement nach einem der vorgehenden Ansprüche, **dadurch gekennzeichnet, dass** das Belitbestandteil (A) aus einer kalkarmen Flugasche erhalten wird.

11. Zement nach Anspruch 10, **dadurch gekennzeichnet, dass** das Belitbestandteil (A) mit energiearmen Synthesemethoden erhalten wird mit Synthesetemperaturen von ca. 800°C.

12. Zement nach einem der vorgehenden Ansprüche, **dadurch gekennzeichnet, dass** er zusätzlich einen superplastifizierenden Mittel umfasst.

13. Verfahren zum Erhalt eines Bauzements, **dadurch gekennzeichnet, dass** es die Schritte umfasst:
(a) Herstellen eines Belitzementklinkers (A) aus kalkarmer Flugasche durch Zufügen von Kalk (CaO) zum Klinker, bis ein CaO/SiO₂-Molverhältnis von ca. 2 erreicht wird und unter hydrothermischer Behandlung der Mischung;
(b) Mahlen des erhaltenen Klinkers; und
(c) Zufügen eines zweiten Bestandteils (B) zum Klinker, das aus zumindest einem keramischen Material mit einer Partikelgröße von unter 100 nm besteht.

14. Verfahren nach Anspruch 13, **dadurch gekennzeichnet, dass** der Belitzementklinker mit einer energiearmen Synthesemethode erhalten wird.

15. Verwendung eines keramischen Materials mit einer Partikelgröße von unter 100 nm nach einem der Ansprüche 1 bis 9 zur Aktivierung eines Belitklinkers in einem Baumaterial.

16. Paste, die ein Bindemittel und Wasser umfasst, **dadurch gekennzeichnet, dass** das Bindemittel einen Zement nach einem der Ansprüche 1 bis 12 umfasst.

17. Mörtel, der ein Bindemittel, einen Zuschlag und Wasser enthält, **dadurch gekennzeichnet, dass** das Bindemittel einen Zement nach einem der Ansprüche 1 bis 12 umfasst.

18. Beton, der ein Bindemittel, einen Zuschlag und Wasser umfasst, **dadurch gekennzeichnet, dass** das Bindemittel einen Zement nach einem der Ansprüche 1 bis 12 umfasst.

## Revendications

1. Ciment de construction comprenant comme premier composant du clinker de bélite (A) et un deuxième composant (B) constitué de particules d'au moins une matière céramique, **caractérisé en ce que** ladite matière céramique a une dimension de particule inférieure à 10 nm.

2. Ciment selon la revendication 1, **caractérisé en ce que** la dimension de particule de ladite matière céramique est comprise entre 5 nm et 50 nm.

3. Ciment selon l'une quelconque des revendications précédentes, **caractérisé en ce qu'**il comprend une proportion dudit deuxième composant (B) entre 0,2% et 15% en poids du composant de bélite (A).

4. Ciment selon la revendication 3, **caractérisé en ce qu'**il comprend une proportion dudit deuxième composant (B) entre 2% et 10% en poids du composant de bélite.

5. Ciment selon l'une quelconque des revendications précédentes, **caractérisé en ce que** ledit deuxième composant (B) comprend des particules d'au moins une matière de silice (SiO₂).

6. Ciment selon l'une quelconque des revendications précédentes, **caractérisé en ce que** ledit deuxième composant (B) comprend des particules d'au moins une matière d'alumine (Al₂O₃).

7. Ciment selon l'une quelconque des revendications précédentes, **caractérisé en ce que** ledit deuxième composant (B) comprend une dispersion colloïdale de particules de matière céramiques.

8. Ciment selon l'une quelconque des revendications précédentes, **caractérisé en ce que** ledit deuxième composant (B) comprend des particules de deux matières céramiques différentes.

9. Ciment selon la revendication 8, **caractérisé en ce que** les deux matières ont une dimension de particule différente.

10. Ciment selon l'une quelconque des revendications précédentes, **caractérisé en ce que** le composant de bélite (A) est obtenu à partir de cendres volantes à faible teneur en chaux.

11. Ciment selon la revendication 10, **caractérisé en ce que** le composant de bélite (A) est obtenu par de méthodes de synthèse de faible énergie, avec des températures de synthèse d'environ 800°C.

12. Ciment selon l'une quelconque des revendications précédentes, **caractérisé en ce qu'**il comprend de manière supplémentaire un agent superplastifiant.

13. Procédé d'obtention d'un ciment de construction, **caractérisé en ce qu'**il comprend les étapes de :
(a) production d'un clinker de ciment de bélite (A) à partir de cendres volantes à faible teneur en chaux en ajoutant de la chaux (CaO) au clinker jusqu'à atteindre une relation molaire CaO/SiO₂ d'environ 2 et en traitant hydrothermiquement le mélange :
(b) broyage du clinker obtenu ; et
(c) addition au clinker d'un deuxième composant (B) constitué d'au moins une matière céramique avec une dimension de particule inférieure à 100 nm.

14. Procédé selon la revendication 13, **caractérisé en ce que** le clinker de ciment de bélite est obtenu par une méthode de synthèse de faible énergie.

15. Utilisation d'une matière céramique ayant une dimension de particule inférieure à 100 nm selon l'une quelconque des revendications 1 à 9 pour activer un clinker de bélite dans un matériau de construction.

16. Pâte comprenant un liant et de l'eau, **caractérisée en ce que** le liant comprend un ciment selon l'une quelconque des revendications 1 à 12.

17. Mortier comprenant un liant, un agrégat et de l'eau, **caractérisé en ce que** le liant comprend un ciment selon l'une quelconque des revendications 1 à 12.

18. Béton comprenant un liant, un agrégat et de l'eau, **caractérisé en ce que** le liant comprend un ciment selon l'une quelconque des revendications 1 à 12.
